# EUROPEAN PATENT SPECIFICATION

(11) **EP 3 364 029 B1**
(45) Date of publication and mention of the grant of the patent: **22.05.2019**
(21) Application number: 16855286.7
(22) Date of filing: 03.10.2016
(51) Int. Cl.: F04B 39/00, F04C 23/02, F04C 18/356, F04C 29/00, H02K 7/04

(54) **COMPRESSOR**
VERDICHTER
COMPRESSEUR

(30) Priority: 16.10.2015 JP 2015204809
(43) Date of publication of application: 22.08.2018
(73) Proprietor: Daikin Industries, Ltd., Osaka-shi, Osaka 530-8323 (JP)
(72) Inventor: HIGUCHI, Masahide, Kita-ku, Osaka-shi, Osaka 530-8323 (JP)
(74) Representative: Goddar, Heinz J.
(86) International application number: PCT/JP2016/079276
(87) International publication number: WO 2017/065032

(56) References cited:
- EP-A1- 2 905 470
- JP-A- 2004 270 654
- JP-A- 2014 129 755
- US-A- 6 132 177

## Description

### TECHNICAL FIELD

The present invention relates to compressors.

### BACKGROUND ART

Conventionally, there has been a compressor in which a compression mechanism portion is driven by a motor via a crankshaft, the crankshaft having an eccentric portion and being connected to a rotor of the motor (for example, see JP 2004-270654 A (Patent Literature 1)).

### CITATION LIST

### PATENT LITERATURE

Patent Literature 1: JP 2004-270654 A

### SUMMARY OF INVENTION

### TECHNICAL PROBLEMS

In the above compressor, since the crankshaft tilts in a bearing due to receiving compressive load during operation, or the crankshaft bends due to the compressive load, the load due to uneven air gap of the motor, and the centrifugal force of a balance weight, the motor rotates while the position of the center of gravity of the rotor of the motor changes, so that the rotor vibrates in a radial direction. In such a compressor, since it is difficult to analyze the inclination and bending of the crankshaft to take countermeasures, there is a problem that the vibration in the radial direction of the rotor and the noise caused by the vibration in the radial direction are not easily reduced.

Accordingly, it is an object of the present invention to provide a compressor capable of reducing vibrations and noises of a rotor at low cost with a simple structure without adding new parts.

### Solution to Problem

In order to solve the problem, a compressor according to the present invention comprises:
a rotating shaft including an eccentric portion;
a motor including a rotor connected to the rotating shaft;
a compression mechanism portion driven by the motor via the rotating shaft;
a first balance weight provided at one end in an axial direction of the rotor on a side facing the compression mechanism portion; and
a second balance weight provided at the other end in the axial direction of the rotor, wherein
the first balance weight and the second balance weight are disposed in such a manner that at least either of a center of gravity of the first balance weight or a center of gravity of the second balance weight is positioned at a preset lead angle in a rotation direction of the rotor with respect to a reference plane passing through a rotation center along an eccentric direction of the eccentric portion of the rotating shaft.

According to the above configuration, the first and second balance weights are disposed in such a manner that at least one of the centers of gravity of the first and second balance weights provided at both ends in the axial direction of the rotor is positioned at the preset lead angles in the rotation direction of the rotor with respect to the eccentric direction of the eccentric portion of the rotating shaft. At this time, setting the lead angle to an optimum angle allows a reduction of a vibration acceleration component in a radial direction of the rotor. Therefore, it is possible to reduce vibrations and noises at low cost without adding new parts.

In an embodiment, the first balance weight and the second balance weight are disposed in such a manner that the center of gravity of the first balance weight and the center of gravity of the second balance weight are positioned at the preset lead angle in the rotation direction of the rotor with respect to the reference plane passing through the rotation center along the eccentric direction of the eccentric portion of the rotating shaft.

According to the above embodiment, by disposing the first balance weight and the second balance weight in such a manner that the center of gravity of the first balance weight and the center of gravity of the second balance weight are positioned at the preset lead angle in the rotation direction of the rotor with respect to the reference plane passing through the rotation center along the eccentric direction of the eccentric portion of the rotating shaft, it is possible to effectively reduce the vibration acceleration component in the radial direction of the rotor.

It should be noted that the lead angle of the first balance weight and the lead angle of the second balance weight may be different from each other.

In an embodiment, the lead angle is larger than 3° and within 10°.

According to the above embodiment, the first and second balance weights are disposed in such a manner that at least either of the center of gravity of the first balance weight or the center of gravity of the second balance weight is positioned at the lead angle of larger than 3° and within 10° in the rotation direction of the rotor with respect to the eccentric direction of the eccentric portion of the rotating shaft. Thus, the effect of reducing the vibration acceleration component in the radial direction of the rotor can be easily obtained.

### Advantageous Effects of Invention

As is clear from the above, according to the present invention, by positioning at least one of the centers of gravity of the first and second balance weights provided at both ends in the axial direction of the rotor at the preset lead angle in the rotation direction of the rotor with respect to a reference plane passing through the rotation center along the eccentric direction of the eccentric portion of the rotating shaft, it is possible to achieve a compressor capable of reducing vibrations and noises at low cost without adding new parts.

### BRIEF DESCRIPTION OF DRAWINGS

FIG. 1 is a longitudinal sectional view of a compressor according to an embodiment of the present invention.
FIG. 2 is a top view of a main part including a rotor of a motor of the compressor.
FIG. 3 is a graph showing changes in a vibration acceleration with respect to an operation frequency of the motor.
FIG. 4 is a graph showing changes in a vibration acceleration with respect to an operation frequency of another motor.

### DESCRIPTION OF EMBODIMENTS

Embodiments of a compressor of the present invention will be described in detail hereinafter with reference to the drawings.

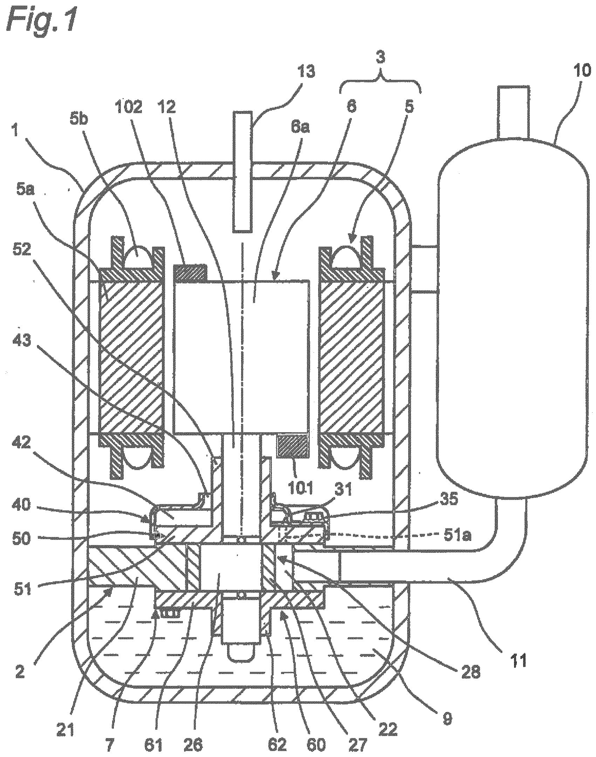

FIG. 1 is a longitudinal sectional view of a compressor according to an embodiment of the present invention.

As shown in FIG. 1, the compressor of this embodiment includes a hermetically-sealed container 1, a compression mechanism portion 2 disposed in the hermetically-sealed container 1, and a motor 3 disposed in the hermetically-sealed container 1 and configured to drive the compression mechanism portion 2 via a rotating shaft 12. The compressor of this embodiment is a rotary compressor having a one-cylinder structure.

In the compressor, the compression mechanism portion 2 is disposed on a lower side in the hermetically-sealed container 1, and the motor 3 is disposed on an upper side of the compression mechanism portion 2. The motor 3 is connected to an upper side of the rotating shaft 12 and includes a rotor 6 in which a permanent magnet (not shown) is embedded, and a stator 5 surrounding an outer periphery side of the rotor 6. The rotor 6 of the motor 3 drives the compression mechanism portion 2 via the rotating shaft 12.

The rotor 6 includes a rotor body 6a formed in a cylindrical shape and a plurality of permanent magnets (not shown) formed in a flat plate shape and embedded in the rotor body 6a. The rotor body 6a is made of, for example, laminated electromagnetic steel plates.

The stator 5 includes a stator core 5a formed in a cylindrical shape and a coil 5b wound around the stator core 5a. The stator core 5a includes a plurality of laminated steel plates and is fitted in the hermetically-sealed container 1 by shrink fitting or the like. Each coil 5b is wound around each of tooth portions of the stator core 5a, and the coil 5b is wound as what is called a concentrated winding.

The compression mechanism portion 2 sucks refrigerant gas from an accumulator 10 through a suction pipe 11. This refrigerant gas is obtained by controlling this compressor, as well as a condenser, an expansion mechanism, and an evaporator (not shown) constituting an air conditioner as an example of a refrigeration system.

In the compressor, the compressed high temperature and high pressure refrigerant gas is discharged from the compression mechanism portion 2 to fill an inside of the hermetically-sealed container 1, and flows through the gap between the stator 5 and the rotor 6 of the motor 3 to cool the motor 3, and then is discharged from a discharge pipe 13 provided on an upper side of the motor 3 to an outside.

An oil sump 9 in which lubricating oil is stored is formed in a lower part of a high pressure region in the hermetically-sealed container 1. The lubricating oil moves from the oil sump 9 to a sliding portion, such as the compression mechanism portion 2, through an oil passage (not shown) provided in the rotating shaft 12 to lubricate the sliding portion.

The compression mechanism portion 2 includes a cylinder 21 attached to an inner surface of the hermetically-sealed container 1, and an upper end-plate member 50 (front head) and a lower end-plate member 60 (rear head) respectively attached to upper and lower open ends of the cylinder 21. The cylinder 21, the upper end-plate member 50, and the lower end-plate member 60 form a cylinder chamber 22.

The upper end-plate member 50 includes a main body portion 51 formed in a disc shape, and a boss portion 52 provided at a center of the main body portion 51 in an upward direction. The rotating shaft 12 is inserted in the main body portion 51 and the boss portion 52.

The main body portion 51 is provided with a discharge port 51a communicating with the cylinder chamber 22. A discharge valve 31 is attached to the main body portion 51 so as to be positioned on an opposite side of the main body portion 51 from the cylinder 21. The discharge valve 31 is, for example, a reed valve and opens and closes the discharge port 51a.

A muffler cover 40 formed in a cup shape is attached to the main body portion 51 on a side opposite to the cylinder 21 so as to cover the discharge valve 31. The muffler cover 40 is fixed to the main body portion 51 with a bolt 35 or the like. The boss portion 52 is inserted in the muffler cover 40. The muffler cover 40 and the upper end-plate member 50 form a muffler chamber 42. The muffler chamber 42 and the cylinder chamber 22 communicate with each other through the discharge port 51a.

The muffler cover 40 has a hole 43 communicating the muffler chamber 42 with an outside of the muffler cover 40.

The lower end-plate member 60 includes a main body portion 61 formed in a disc shape, and a boss portion 62 provided at a center of the main body portion 61 in a downward direction. The rotating shaft 12 is inserted in the main body portion 61 and the boss portion 62.

In this way, one end of the rotating shaft 12 is supported by the upper end-plate member 50 and the lower end-plate member 60. The one end (a supporting end side) of the rotating shaft 12 enters an inside of the cylinder chamber 22.

An eccentric portion 26 is provided on the supporting end side of the rotating shaft 12 so as to be positioned in the cylinder chamber 22 of the compression mechanism portion 2. The eccentric portion 26 is fitted to a roller 27 of a piston 28. The piston 28 is revolvably disposed within the cylinder chamber 22, and the revolution movement of the piston 28 brings about the compression action.

In other words, the one end of the rotating shaft 12 is supported by a housing 7 of the compression mechanism portion 2 on both sides of the eccentric portion 26. The housing 7 includes the upper end-plate member 50 and the lower end-plate member 60.

In addition, a first balance weight 101 is provided at a lower end (that is, one end in an axial direction on a side facing the compression mechanism portion 2) of the rotor 6 and on a side opposite to an eccentric direction of the eccentric portion 26 of the rotating shaft 12. On the other hand, a second balance weight 102 is provided at an upper end (that is, the other end in the axial direction) of the rotor 6 and on the same side as the eccentric direction of the eccentric portion 26 of the rotating shaft 12. The first and second balance weights 101 and 102 are fastened to the rotor 6 with rivets (not shown).

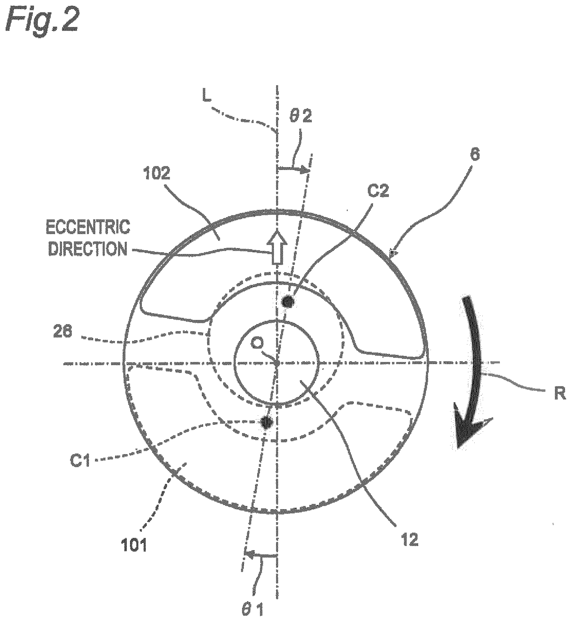

FIG. 2 is a top view of a main part including the rotor 6 of the motor 3.

As shown in FIG. 2, a center of gravity C1 of the first balance weight 101 is disposed at a position of a preset lead angle θ1 in a rotation direction (arrow R) of the rotor 6 with respect to a reference plane including a straight line L representing the eccentric direction of the eccentric portion 26 of the rotating shaft 12 and passing through a rotation center O.

On the other hand, a center of gravity C2 of the second balance weight 102 is disposed at a position of a preset lead angle θ2 in the rotation direction (arrow R) of the rotor 6 with respect to the reference plane passing through the rotation center O along the straight line L representing the eccentric direction of the eccentric portion 26 of the rotating shaft 12.

In this embodiment, the lead angles θ1 and θ2 are set to 5°.

The first and second balance weights 101 and 102 reduce an imbalance in the rotating shaft 12 due to the eccentric portion 26.

Here, in an ideal compressor where the rotating shaft 12 is a completely rigid body, and the rotating shaft 12 does not tilt or bend, even when the centers of gravity C1 and C2 of the first and second balance weights 101 and 102 are set to a position (a reference position) on the reference plane passing through the rotation center O along the straight line L representing the eccentric direction of the eccentric portion 26 of the rotating shaft 12, there is no problem that the rotor 6 vibrates. However, actually, since the rotating shaft 12 tilts in the bearing due to receiving compressive load during operation, or the rotating shaft 12 bends due to the compressive load, the load due to uneven air gap of the motor, and the centrifugal force of balance weight, the rotor 6 vibrates in a radial direction.

Accordingly, in order to solve such a problem, in the compressor having the above configuration, the inventors of the present invention conducted experiments to measure changes in a vibration acceleration with respect to an operating frequency when the centers of gravity C1 and C2 of the first and second balance weights 101 and 102 of the motor 3 are set to the reference position (±0°), a lead angle of 5°, and a delay angle of 5°.

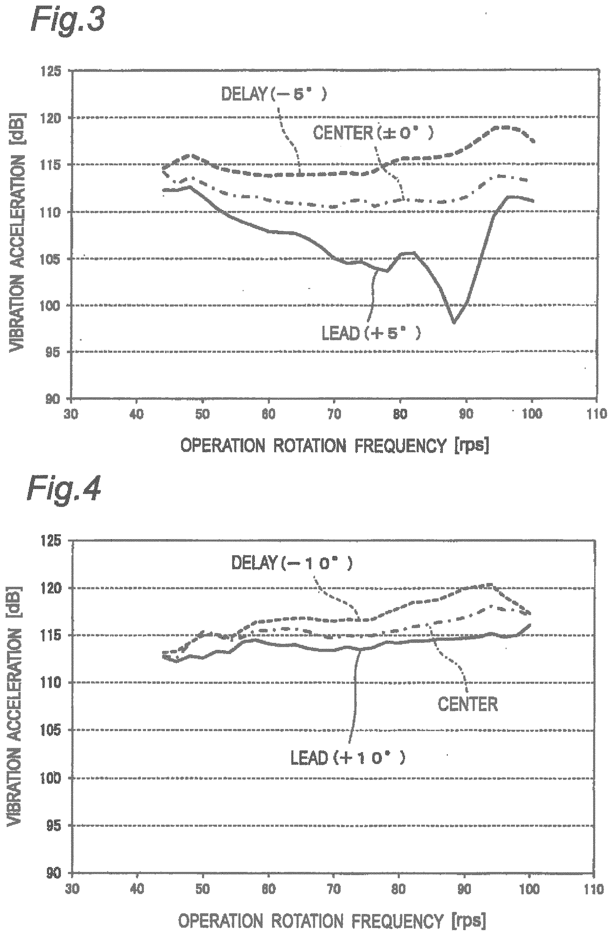

FIG. 3 shows changes in a vibration acceleration with respect to an operation frequency of the motor 3 obtained through this experiment. In FIG. 3, the abscissa represents the operation rotation frequency [rps] (rotations per second), and the ordinate represents the vibration acceleration [dB] in the radial direction of the rotor 6. Here, the vibration acceleration is an acceleration component at the same frequency as the operation rotation frequency.

In FIG. 3, the one-dot chain line ("center (±0°)") of the graph represents a case where the centers of gravity C1 and C2 of the first and second balance weights 101 and 102 are disposed at positions on the reference plane passing through the rotation center O along the straight line L representing the eccentric direction of the eccentric portion 26 of the rotating shaft 12.

In addition, the solid line ("lead (+5°)") of the graph represents a case where the centers of gravity C1 and C2 of the first and second balance weights 101 and 102 are disposed at positions at the lead angle of 5° with respect to the reference plane passing through the rotation center O along the straight line L representing the eccentric direction of the eccentric portion 26 of the rotating shaft 12.

In addition, the dotted line ("delay (-5°)") of the graph represents a case where the centers of gravity C1 and C2 of the first and second balance weights 101 and 102 are disposed at positions at the delay angle of 5° with respect to the reference plane passing through the rotation center O along the straight line L representing the eccentric direction of the eccentric portion 26 of the rotating shaft 12.

As is apparent from the experimental result in FIG. 3, it was found that when the centers of gravity C1 and C2 of the first and second balance weights 101 and 102 are disposed at positions at the lead angle of 5° with respect to the reference plane passing through the rotation center O along the straight line L representing the eccentric direction of the eccentric portion 26 of the rotating shaft 12, the vibration acceleration can be greatly reduced.

In the compressor having the above configuration, the first and second balance weights 101 and 102 are disposed so that both centers of gravity of the first and second balance weights 101 and 102 provided at both ends in the axial direction of the rotor 6 are positioned at the preset lead angles θ1 and θ2 (θ1 = θ2) in the rotation direction of the rotor 6 with respect to the eccentric direction of the eccentric portion 26 of the rotating shaft 12. At this time, setting the lead angle θ1 to an optimum angle allows a reduction of the vibration acceleration component in the radial direction of the rotor 6. Therefore, it is possible to reduce vibrations and noises at low cost without adding new parts.

It should be noted that the lead angle θ1 of the first balance weight 101 and the lead angle θ2 of the second balance weight 102 may be different from each other. Also, the first and second balance weights 101 and 102 may be disposed so that either of the first balance weight 101 or the second balance weight 102 is disposed at a position of a preset lead angle in the rotation direction of the rotor 6 with respect to the reference plane passing through the rotation center O along the straight line L representing the eccentric direction of the eccentric portion 26 of the rotating shaft 12. Also in this case, the effect of reducing vibrations and noise can be obtained.

In the above embodiment, the centers of gravity C1 and C2 of the first and second balance weights 101 and 102 are disposed at the lead angle 5° with respect to the reference plane passing through the rotation center O along the straight line L representing the eccentric direction of the eccentric portion 26 of the rotating shaft 12; however, the lead angle is not limited thereto and may be larger than 3° and within 10°. Thus, the effect of reducing the vibration acceleration component in the radial direction of the rotor can be easily obtained.

For example, FIG. 4 shows changes in a vibration acceleration with respect to an operation frequency obtained by an experiment on another motor. The compressor in FIG. 4 has the same configuration as the compressor shown in FIG. 3 except that the motor 3 in FIG. 4 differs from the motor 3 in FIG. 3 in that its capacity is larger, so that FIGS. 1 and 2 are also applied to the compressor in FIG. 4.

In FIG. 4, the abscissa represents an operation rotation frequency [rps] (rotations per second), and the ordinate represents a vibration acceleration [dB] in the radial direction of the rotor 6. Here, the vibration acceleration is an acceleration component at the same frequency as the operation rotation frequency.

In FIG. 4, the one-dot chain line ("center (±0°)") of the graph represents a case where the centers of gravity C1 and C2 of the first and second balance weights 101 and 102 are disposed at positions on the reference plane passing through the rotation center O along the straight line L representing the eccentric direction of the eccentric portion 26 of the rotating shaft 12.

In addition, the solid line ("lead (+10°)") of the graph represents a case where the centers of gravity C1 and C2 of the first and second balance weights 101 and 102 are disposed at positions at a lead angle 10° with respect to the reference plane passing through the rotation center O along the straight line L representing the eccentric direction of the eccentric portion 26 of the rotating shaft 12.

In addition, the dotted line ("delay (-10°)") of the graph represents a case where the centers of gravity C1 and C2 of the first and second balance weights 101 and 102 are disposed at positions at a delay angle 10° with respect to the reference plane passing through the rotation center O along the straight line L representing the eccentric direction of the eccentric portion 26 of the rotating shaft 12.

As is apparent from the experimental result in FIG. 4, when the centers of gravity C1 and C2 of the first and second balance weights 101 and 102 are disposed at positions at the lead angle 10° with respect to the reference plane passing through the rotation center O along the straight line L representing the eccentric direction of the eccentric portion 26 of the rotating shaft 12, the vibration acceleration was greatly reduced.

In the above embodiment, a compressor having a one-cylinder structure is described. Alternatively, the present invention may be applied to a compressor having a two-cylinder structure.

In addition, in the above embodiment, the rotary compressor is described. Alternatively, the present invention may be applied to compressors such as a swing compressor and a scroll compressor.

In addition, in the above embodiment, the compressor provided with the permanent magnet embedded type motor is described. Alternatively, the present invention may be applied to compressors provided with a motor having another configuration such as a reluctance motor.

The specific embodiments of the present invention are described above; however, the present invention is not limited to the above-described embodiments, and various modifications can be made within the scope of the appended claims.

### REFERENCE SIGNS LIST

- 1:: Hermetically-sealed container
- 2:: Compression mechanism portion
- 3:: Motor
- 5:: Stator
- 6:: Rotor
- 7:: Housing
- 9:: Oil sump
- 10:: Accumulator
- 11:: Suction pipe
- 12:: Rotating shaft
- 13:: Discharge pipe
- 21:: Cylinder
- 22:: Cylinder chamber
- 25:: Bush
- 26:: Eccentric portion
- 27:: Roller
- 28:: Piston
- 31:: Discharge valve
- 35:: Bolt
- 40:: Muffler cover
- 42:: Muffler chamber
- 43:: Hole
- 50:: End-plate member
- 51:: Main body portion
- 51a:: Discharge port
- 52:: Boss portion
- 60:: End-plate member
- 61:: Main body portion
- 62:: Boss portion
- 101:: First balance weight
- 102:: Second balance weight

## Claims

1. A compressor comprising:
a rotating shaft (12) including an eccentric portion (26);
a motor (3) including a rotor (6) connected to the rotating shaft (12);
a compression mechanism portion (2) driven by the motor (3) via the rotating shaft (12);
a first balance weight (101) provided at one end in an axial direction of the rotor (6) on a side facing the compression mechanism portion (2); and
a second balance weight (102) provided at the other end in the axial direction of the rotor (6), **characterised in that**
the first balance weight (101) and the second balance weight (102) are disposed in such a manner that at least either of a center of gravity of the first balance weight (101) or a center of gravity of the second balance weight (102) is positioned at a preset lead angle in a rotation direction of the rotor (6) with respect to a reference plane passing through a rotation center along an eccentric direction of the eccentric portion (26) of the rotating shaft (12).

2. The compressor according to claim 1, wherein
the first balance weight (101) and the second balance weight (102) are disposed in such a manner that the center of gravity of the first balance weight (101) and the center of gravity of the second balance weight (102) are positioned at the preset lead angle in the rotation direction of the rotor (6) with respect to the reference plane passing through the rotation center along the eccentric direction of the eccentric portion (26) of the rotating shaft (12).

3. The compressor according to claim 1 or 2, wherein
the lead angle is larger than 3° and within 10°.

## Patentansprüche

1. Verdichter, der Folgendes aufweist:
eine Drehwelle (12), die einen exzentrischen Abschnitt (26) aufweist;
einen Motor (3), der einen Rotor (6) aufweist, der mit der Drehwelle (12) verbunden ist;
einen Verdichtungsmechanismusabschnitt (2), der über die Drehwelle (12) von dem Motor (3) angetrieben wird;
ein erstes Ausgleichsgewicht (101), das an einem Ende in einer Axialrichtung des Rotors (6) auf einer Seite, die dem Verdichtungsmechanismusabschnitt (2) zugewandt ist, vorgesehen ist; und
ein zweites Ausgleichsgewicht (102), das an dem anderen Ende in der Axialrichtung des Rotors (6) vorgesehen ist,
**dadurch gekennzeichnet, dass**
das erste Ausgleichsgewicht (101) und das zweite Ausgleichsgewicht (102) derart angeordnet sind, dass ein Schwerpunkt des ersten Ausgleichsgewichts (101) und/oder ein Schwerpunkt des zweiten Ausgleichsgewichts (102) an einem vorbestimmten Steigungswinkel in einer Drehrichtung des Rotors (6) hinsichtlich einer Bezugsebene, die durch eine Drehmitte entlang einer exzentrischen Richtung des exzentrischen Abschnitts (26) der Drehwelle (12) verläuft, angeordnet ist.

2. Verdichter nach Anspruch 1, wobei
das erste Ausgleichsgewicht (101) und das zweite Ausgleichsgewicht (102) derart angeordnet sind, dass der Schwerpunkt des ersten Ausgleichsgewichts (101) und der Schwerpunkt des zweiten Ausgleichsgewichts (102) an dem vorbestimmten Steigungswinkel in der Drehrichtung des Rotors (6) hinsichtlich der Bezugsebene, die durch die Drehmitte entlang der exzentrischen Richtung des exzentrischen Abschnitts (26) der Drehwelle (12) verläuft, positioniert sind.

3. Verdichter nach Anspruch 1 oder 2, wobei
der Steigungswinkel größer als 3° und kleiner als 10° ist.

## Revendications

1. Compresseur comprenant :
un arbre de rotation (12) comprenant une partie excentrée (26) ;
un moteur (3) comprenant un rotor (6) connecté à l'arbre de rotation (12) ;
une partie de mécanisme de compression (2) entraînée par le moteur (3) par le biais de l'arbre de rotation (12) ;
un premier contrepoids (101) placé à un bout dans une direction axiale du rotor (6) sur un côté faisant face à la partie du mécanisme de compression (2) ; et
un deuxième contrepoids (102) placé à l'autre bout dans la direction axiale du rotor (6),
**caractérisé en ce que**
le premier contrepoids (101) et le deuxième contrepoids (102) sont disposés de façon à ce qu'au moins soit un centre de gravité du premier contrepoids (101) soit un centre de gravité du deuxième contrepoids (102) soit positionné à un angle d'inclinaison préréglé dans un sens de rotation du rotor (6) relativement à un plan de référence passant à travers un centre de rotation le long d'une direction excentrée de la partie excentrée (26) de l'arbre de rotation (12).

2. Compresseur selon la revendication 1,
le premier contrepoids (101) et le deuxième contrepoids (102) étant disposés de façon que le centre de gravité du premier contrepoids (101) et le centre de gravité du deuxième contrepoids (102) soient positionnés à l'angle d'inclinaison du rotor (6) relativement au plan de référence passant à travers le centre de rotation le long de la direction excentrée de la partie excentrée (26) de l'arbre de rotation (12).

3. Compresseur selon la revendication 1 ou 2, l'angle d'inclinaison étant supérieur à 3° et inférieur à 10°.
